# EUROPEAN PATENT APPLICATION

(11) **EP 0 634 849 A1**
(43) Date of publication of application: **18.01.1995**
(21) Application number: 93202059.7
(22) Date of filing: 13.07.1993
(51) Int. Cl.: H04J 3/04

(54) **Signal selection device**

(71) Applicant: ALCATEL BELL Naamloze Vennootschap, B-2018 Antwerpen 1 (BE)
(72) Inventor: Van Hoogenbemt, Stefaan Margriet Albert, B-2800 Mechelen (BE)

(57) **Abstract**

Signal selection device for selecting, under control of a device control signal (UP-IN, DO-IN), a selected signal out of n digital signals (IN1, ..., IN8), in such a way that upon transition from one selected signal to another one no glitches can occur.

The device includes a selection circuit (SC) composed of a plurality of sets of logic ports connected in cascade and comprising a decreasing number of such ports, and of another plurality of flipflops associated with these ports and triggered by the output signals thereof. The digital signals are applied to the ports of the first one of the mentioned sets. It also includes n control circuits (CC1, ..., CC8) to each of which a respecive digital signal is applied and each of which generates a third control signal (C1/C8) in response to a second control signal (UP-IN1, DO-IN1/UP-IN8, DO-IN8) obtained by clocking the device control signal through the selection circuit by means of the flipflops, and in response to fourth (UP12/UP81) and fifth (DO18, DO87) control signals derived from the respective second contol signal by a previous and a next control circuit respectively. The thus generated third control signals are also applied to the logic ports of the above mentioned first set to select the selected signal.

## Description

The present invention relates to a signal selection device for selecting, under control of a device control signal applied to a control input thereof, a selected signal out of n digital signals applied to respective inputs of said device.

Such a device is already known in the art, e.g. from the published European Patent Application *EP*-*A1*-*0520127 A1*. Therein, the selection device is realized by a multiplexer circuit which selects one out of n signals derived from a clock signal by delaying the latter clock signal over predetermined time intervals. The selected signal is used to sample an incoming data stream from which the device control signal is derived by processing the variation in time of the middle of 0 1 0 patterns included therein. The latter device control signal indicates whether the currently selected signal is still the optimal one for the above sampling, or whether the signal provided at the next or previous input of the multiplexer has to be chosen. Obviously this implies that relative time variations between the chosen clock signal and the data stream never exceed the time interval between two consecutive delayed clock signals.

Since the signal thus generated at the output of the multiplexer is used to sample the incoming data stream, this signal has to be glitchfree, i.e. it may not contain short additional positive pulses. Therefore the transition from one selected delayed clock signal to another one has to occur at a moment when both signals, i.e. the previously and currently chosen one, have the same digital value. Indeed, supposing that at the moment of the transition the previously chosen signal is low, while the currently chosen one is still high due to the relative delay between the clock signals, then the resulting output signal goes from low to high for a short time, i.e. until the currently chosen signal also becomes low, and then goes low. To avoid situations as the one just described, the relative position of the control signal with respect to the input signals at the moment the transition occurs, has to be well known.

Due to an unknown switching delay in the multiplexer of the known device when switching from one input to another one, this position is not exactly known. This is especially disadvantageous when the input signals are high bit rate signals, because then the margin on the transition moment is relatively small.

An object of the present invention is to provide a selection device of the above known type but wherein the above transition moment is well defined.

According to the invention, this object is achieved due to the fact that said signal selection device includes :
- a selection circuit including a plurality of sets of logic ports, said logic ports being connected in cascade and said sets including a decreasing number of logic ports and being subdivided in subsets, an output of each logic port of each of said subsets being connected to an input of a logic port of a next set, each of said n digital signals being applied to a first input of a respective logic port of the first set of said cascade and the last set of said cascade containing a last logic port providing said selected signal, said selection circuit also including a plurality of gating means, each one of which is associated with a respective one of said logic ports of a respective subset and is controlled by a first control signal provided at the output of said associated logic port, an output of said each one being connected to inputs of the gating means associated with the logic ports of a preceding subset of said cascade, the outputs of the latter logic ports being connected with the inputs of the logic port associated to said one gating means, said device control signal being applied to the gating means associated with said last logic port and the gating means associated with the logic ports of said first set each generating a second control signal indicative of said device control signal;
- n control circuits each able to generate from a respective one of said second control signals a third control signal to be applied to a second input of a respective logic port of said first set, the third control signal which is applied to the logic port to which the digital signal corresponding to said selected signal is applied being activated by the corresponding control circuit.

Indeed, by the transmission of the device control signal through the selection device under control of the signals provided at the outputs of the logic ports, the n second control signals thus provided are synchronous with the respective input signals and the control circuits can be realized in such a way that the instant of activation of the third control signal they generate is well defined. As a result the transition moment from a previously selected signal to a currently selected one is well known and the above described problem can be avoided.

Another characteristic feature of the present invention is that said device control signal indicates whether the input to which the signal to be selected is applied is the same one as the one to which the previously selected signal was applied, or a previous or a next one and that each of said control circuits is able to generate a fourth and a fifth control signal to be applied to a previous and a next control circuit respectively, said third, fourth and fifth control signals being generated in such a way that said third control signal is active when either a said fourth or a said fifth control signal from a next or a previous control circuit respectively is active or when a previously generated third control signal by said one control circuit was active whilst said second control signal indicates that neither said fourth nor said fifth signal to be generated by said one control circuit have to be active, said third signal being inactive when said second control signal indicates that either said fourth or said fifth control signal to be generated by said control circuit has to be active, the corresponding fourth or fifth control signal then being activated by said control circuit, or when a previously generated third control signal was not active whilst neither a said fourth or a said fifth control signal from a next nor a previous control circuit respectively is active.

In this way the transition from one digital signal to another one in case of an up/down device control signal, is realized by deactivation/activation of the related third control signal by the respective control circuit under control of the related second control signal and of the incoming fourth and fifth control signal received from the next and previous control circuit respectively.

In another embodiment of the invention said control circuits have a predetermined identity and said device control signal is indicative of the identity of the control circuit which has to generate said activated third control signal.

Thus each control circuit can compare its identity with the identity contained in the second control signal it receives and activate the third control signal it generates when these identities match. No fourth and fifth signals are then used.

Yet another characteristic feature of the present invention is that each of said control circuits includes a first gating circuit to which said respective second control signal is applied and which provides at an output thereof said fourth control signal and an intermediate control signal from which said fifth control signal is derived said fourth and intermediate control signals being applied to a second gating circuit of said control circuit, which is, via cascaded first and second logic gates, coupled to a third gating circuit which provides said third control signal; a fourth and fifth control signal from said next and previous control circuit respectively being applied to a fourth gating circuit of said control circuit which provides a signal to be applied to said second logic gate, an output signal of said third gating circuit being coupled back to an input of said first logic gate.

As will be explained further, the control circuit realized in this way is able to generate the above mentioned third, fourth and fifth control signals.

Still another characteristic feature of the invention is that each of said control circuits includes multiplexer means controlled by a common preset control signal and to a first input of which a preset signal is applied, an output of said second logic gate being connected to a second input of said multiplexer means, and said preset control signal controlling said multiplexer means in such a way that during preset said preset signal is passed to an output thereof, said output being connected with an input of said third gating circuit, said preset signal being active when the third control signal to be generated by said control circuit has to be active.

In this way, one of the digital signals can be selected at start-up or restart of the device, e.g. by an operator, by activating the preset signal applied to the control circuit which generates the associated third control signal and by setting the preset control signal in such a way that the multiplexers of the control circuits pass the preset signal to their output.

The above mentioned and other objects and features of the invention will become more apparent and the invention itself will be best understood by referring to the following description of an embodiment taken in conjunction with the accompanying drawings wherein :
Fig. 1 represents a selection device according to the invention;
Fig. 2 shows the selection circuit SC of Fig. 1 in more detail;
Fig. 3 represents the control circuit CC1 of Fig.1 in more detail;
Fig. 4 shows a time diagram of the signals IN8, IN1 and IN2 of Fig.1;
Fig. 5 shows a time diagram of the signals nr2 and OUT of Fig. 2 for a slow ND13 logic port thereof; and
Fig. 6 shows the same signals as Fig. 5 but for a fast ND13 logic port.

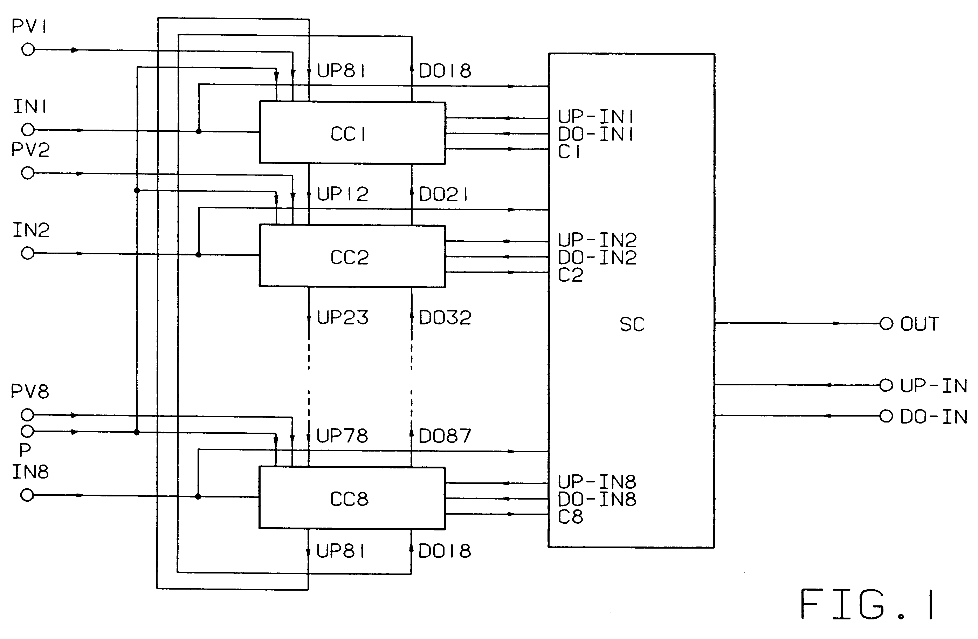

The selection device of Fig. 1 is used in a circuit which generates a sampling signal for sampling incoming data streams, such as the circuit described in the mentioned European Parent Application. More specifically, it is used as replacement of the multiplexer used in this circuit to avoid the earlier described problems of signal glitches.

The selection device includes 8 control circuits CC1 to CC8 to respective inputs of which respective digital input signals IN1 to IN8, a common preset control signal P and respective preset signals PV1 to PV8 are applied. Each of the control circuits generates two respective control signals UP12 to UP81, and DO18 to DO87 which are applied to respective inputs of a next and a previous control circuit respectively.

Each control cicuit supplies a control signal C1/C8 to a respective input of a selection circuit SC which selects one of the signals IN1 to IN8 supplied to it and provides a selected signal OUT. SC also generates sets of 2 control signals UP-IN1 to UP-IN8 and DO-IN1 to DO-IN8 which are provided to two inputs of the respective control circuits CC1 to CC8, and is controlled by a device control signal consisting of two control signals UP-IN and DO-IN.

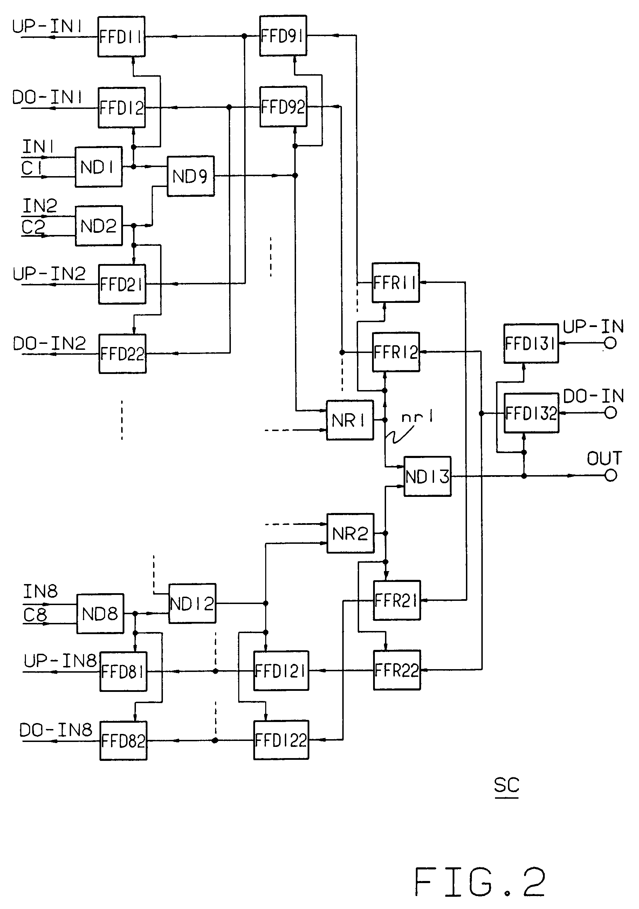

As shown in Fig. 2, SC includes a first set of NAND logic ports ND1 to ND8 to respective ones of which the input signals IN1 to IN8 and C1 to C8 are applied at respectively likenamed terminals. The outputs of subsets of the first set ND1 and ND2, ND3 and ND4, ND5 and ND6, and ND7 and ND8 are connected to inputs of respective NAND logic ports ND9 to ND12 of a next set. The ouputs thereof are again in subsets of two connected to the inputs of repective NOR logic ports NR1 and NR2, the outputs of which are coupled to respective inputs of a NAND logic port ND13 which provides OUT. UP-IN and DO-IN are applied to the input of a flipflop FFD131 and FFD132 respectively, which are both controlled by OUT. The output signals of FFD131 and FFD132 are applied to inputs of two sets of negative edge triggered flipflops FFR11 and FFR21, and FFR12 and FFR22 respectively. FFR11 and FFR12 are controlled by the output signal nr1 of NR1, whilst FFR21 and FFR22 are controlled by the output signal of NR2. In the same way, the output signals of FFR11 to FFR22 are supplied to inputs of 8 respective flipflops FFD91 to FFD122 which are in groups of 2, i.e. FFD91 and FFD92, FFD101 and FFD102 (not shown), a.s.o., controlled by the respective output signals of ND9 to ND12. The interconnection between the outputs of FFR11 to FFR22 and the inputs of FFD91 to FFD122 is realized in such a way that FFR11 and FFR12, and FFR21 and FFR22, are connected with respective ones of the 2 flipflops associated with the NAND ports of the preceding set of which the output signals are applied to NR1 and NR2 respectively. The output signals of FFD91 to FFD122 are in a similar way supplied to the inputs of 16 respective negative edge triggered flipflops FFD11 to FFD82, controlled in groups of 2 by ND1 to ND8. The latter 16 flipflops generate the signals UP-IN1, DO-IN1 to UP-IN8, DO-IN8 respectively.

To be noted that the interconnections between the flipflops are such that they form a tree, each branch of which is associated with a respective one of the NAND ports ND1 to ND8 and thus also with a respective one of the signals C1 to C8.

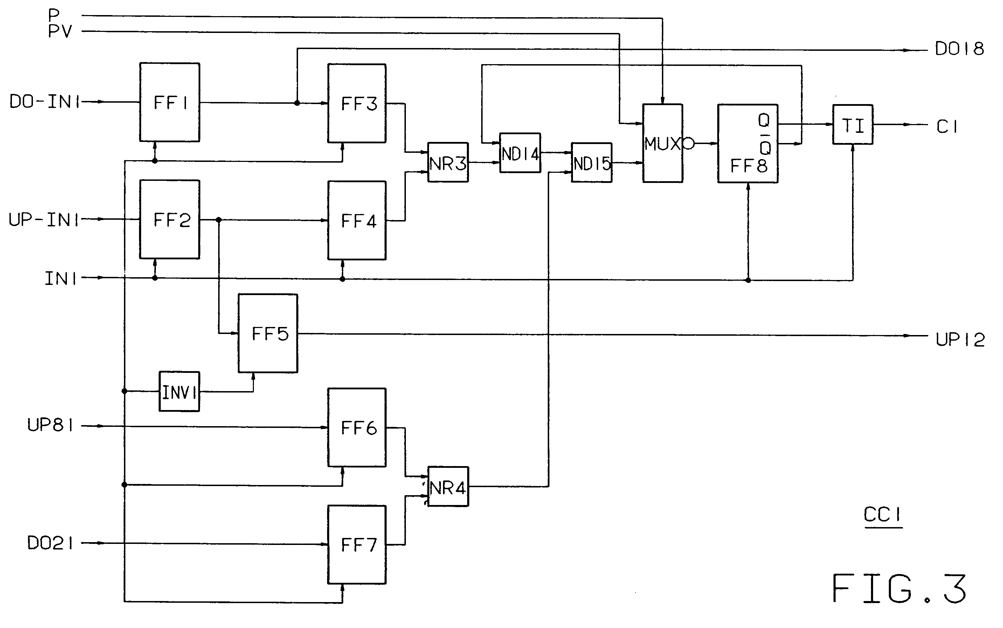

One of the control circuits CC1 to CC8, namely CC1 is represented in more detail in Fig. 3. The structure of the other control circuits is identical.

CC1 includes 8 flipflops FF1 to FF8, 2 NOR logic ports NR3 and NR4, 2 NAND logic ports ND14 and ND15, an invertor INV1, an inverting multiplexer circuit MUX and an inverting tristate low circuit TI which has the same functionality as a flipflop but was chosen for timing purposes. The devices NR3 and NR4 provide like named signals at their output.

DO-IN1, UP-IN1, UP81 and DO21 are applied to FF1, FF2, FF6 and FF7 respectively. An output of FF1 at which DO18 is generated is also connected to FF3, which in its turn is connected to a first input of NR3. FF2 is via FF4 coupled to a second input of NR3 and generates via FF5 the signal UP12. The output of NR3 is via ND14 coupled to an input of ND15, an output signal of which is applied to a first input of MUX, PV and P being applied to a second input and to a control input thereof respectively. An output of MUX is coupled to an input of TI via the non inverting output Q of FF8, the inverting output of which being connected to a second input of ND14. TI provides C1.

The output signals of FF6 and FF7 are applied to respective inputs of NR4, an output of which is connected to a second input of ND15.

TI and all the flipflops of CC1 are controlled by IN1, except FF5 which is controlled by the inverse of IN1, i.e. via the invertor INV1.

Following is now with respect to Figs. 1 to 4, a description of the working of the selection device wherein selection/deselection of IN1 and the working of CC1 is taken as example.

As will be explained later, IN1 is selected by SC when C1 is active, i.e. when it has the logical value 1. C1 must be active in two cases, either when it was already active and neither DO-IN1 nor UP-IN1 are active, i.e. they have the logical value 0 which means that no previous or next signal has been selected, or when UP81 or DO21 is active (value 1) which means that selection has shifted from the previous IN8 or the next IN2 signal to IN1. This is realized by CC1 of Fig. 3 as explained hereafter.

It is first supposed that C1 is already active, i.e. has a high value. This means that the inverting output of FF8 of Fig.3 is high. As a consequence, the signal at the output of ND14 is the inversion of the signal generated by NR3. When the signal NR3 is low, meaning that either DO-IN1 or UP-IN1 is high, the output signal of ND14 which is applied to a first input of ND15 is high. Then, UP81 and DO21 must both be low because DO-IN1 or UP-IN1 is high, which means that the signal applied to a second input of ND15 is high. As a result, the output signal of ND15 is low and that at Q of FF8 is high, and C1 becomes low and is thus deactivated, whilst either UP12 or DO18 become active to pass the control to the next or previous control circuit CC2 or CC8 respectively depending on UP-IN1 or DO-IN1 being high respectively. If however neither DO-IN1 nor UP-IN1 is active, then C1 has to remain active. This is indeed the case, since the output signal of ND14 is then low, meaning that the output signal of ND15 is high and thus C1 stays high.

If on the other hand C1 is deactivated, then the signal at the inverted output of FF8 is low. This means that the output signal of ND14 is always high and that the output signal of ND15 is the inverse of the output signal NR4. Thus when NR4 is low, meaning that either UP18 or DO21 is high, then the output signal of ND15 is high and C1 becomes active. If neither UP81 nor DO21 is high, the output signal of NR4 is high, which means that the output signal of ND15 and FF8 are low and high respectively and thus C1 stays deactivated.

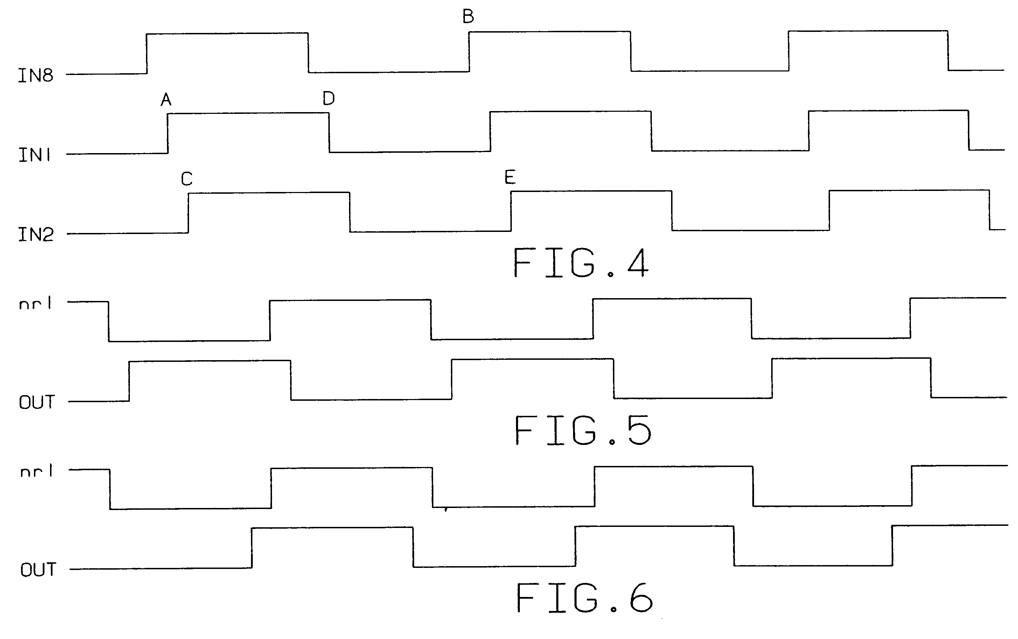

To be noted that the output signal DO18 of FF1 is passed as such to the previous control circuit CC8, whilst the output signal of FF2 is delayed by FF5 clocked by the inverted IN1 signal before being passed to CC2 as UP12. The reason herefore is shown in Fig. 4. Because of the delay of IN1 with respect to IN8, DO18 which is generated by FF1 at a rising edge of IN1, e.g. at point A in Fig. 4, is stable when it is clocked, at the next rising edge of IN8, i.e. at point B, by the flipflop in CC8 which corresponds to FF7 in CC1. Due to the small delay between IN1 and IN2 however, the next rising edge of IN2 after A, i.e. at point C, lays relatively close to A and it could be, especially for high speed signals, that the output signal of FF2 if transmitted as such to CC2 to be clocked by the equivalent of FF6 in CC2 is not stable yet at the moment corresponding to the point C. Therefore the latter output signal is delayed over half a period of IN1, i.e. up to point D, so that the next rising edge of IN2, i.e. point E, lays far enough from D for UP12 to be stable.

At start up or reset of the device, e.g. by an operator, one of the control signals C1 to C8 is activated in the corresponding control circuit CC1/CC8 by controlling the MUX of all these control circuits in such a way, by means of P, that the input thereof to which PV is applied is selected. A signal PV equal to 1 is then applied to the control circuit which generates the to be activated control signal. Afterwards P is changed, in all control circuits, to the value for which MUX selects as input the one connected with ND15.

Following is now a description of SC of Fig. 2, whereby it is assumed that C1 is active. Since C1 has value 1, the output signal of ND1 is the inversion of IN1, whilst the output signals of all other logic ports of the first stage are high. In the same way, the output signal of ND9 corresponds to C1, whilst the output signals of ND10 to ND12 are low. Consequently, the output signal nr1 of NR1 is the inverse of IN1 and the output signal of NR2 is high, whilst the output signal of ND13 which corresponds to the selected signal OUT is IN1. Thus IN1 is selected when C1 is high while C2 to C8 are low.

The control signals UP-IN and DO-IN are clocked through the selection circuit SC at the same rate as an input signal is selected in SC and synchronous with IN1 thanks to the flipflops associated to the different stages of logic gates of SC which are controlled by the output signals of the respective associated logic ports. As can be seen in Fig. 2, the output signal of each flipflop is supplied to the input of two flipflops of the previous stage in the cascade of logic ports, namely to those controlled by the logic ports which supply the input signals of the logic port controlling the first mentioned flipflop. In this way the control signals UP-IN1, DO-IN1 to UP-IN8, DO-IN8 which are thus generated are synchronous with IN1 to IN8 respectively. As a result and thanks to the structure of CC1 to CC8 the position of the respective control signals C1 to C8 is well known with respect to IN1 to IN8 respectively and the earlier mentioned problem of clock glitches is avoided.

To be noted that as mentioned earlier, and for the chosen example, an active signal C1 selects its associated branch of the tree of flipflops to clock UP-IN and DO-IN through SC to become UP-IN8 and DO-IN8. To be noted also that the sets of flipflops of SC are alternatively positive and negative edge triggered flipflops. The reason herefore is made clear by means of the figures 5 and 6 where the control signals of FFD131 and FFD132, and of FFR11 and FFR12, i.e. OUT and nr1 respectively are shown. As can be seen in Fig. 5, which is applicable to a fast ND13 logic, an output signal of FFD131 or FFD132, triggered by the positive edge of OUT is stable when being provided by FFR11 and FFR12 under control of either the positive or the negative edge of nr1. This is because of the relatively large time delays between these edges. On the contrary, Fig. 6, which is applicable to a slow ND13 logic, shows that an output signal of FFD131 or FFD132 clocked by a flipflop of the previous stage under control of the positive edge of nr1 could still be unstable because of the small time delay between the positive edges of OUT and nr1. However, the delays between the positive edges of OUT and the negative edges of nr1 are large enough for the above output signal to be stable when being provided by FFR11 or FFR12. For this reason the flipflops FFR11 to FFR22, and in the same way FFD11 to FFD82 are negative edge triggered flipflops.

To be noted that other types of device control signals can be used than the one used in the above described embodiment of the invention. For instance a control signal could be used which is indicative of an identity assigned to the control circuits. In that case no control signals have to be exchanged between the control circuits. Upon receipt of a control signal from the selection device, the control circuit would then have to compare its identity with the identity contained in that control signal and activate the control signal it generates for SC, when they match. Such a control circuit is obvious to realize for a person skilled in the art, and is therefore not described in detail.

While the principles of the invention have been described above in connection with specific apparatus, it is to be clearly understood that this description is made only by way of example and not as a limitation on the scope of the invention.

## Claims

1. Signal selection device for selecting, under control of a device control signal (UP-IN, DO-IN) applied to a control input thereof, a selected signal (OUT) out of n digital signals (IN1, ..., IN8) applied to respective inputs of said device, characterized in that said signal selection device includes :
- a selection circuit (SC) including a plurality of sets of logic ports (ND1, ..., ND8; ND9, ..., ND12; NR1, NR2; ND13), said logic ports being connected in cascade and said sets including a decreasing number of logic ports and being subdivided in subsets (ND1, ND2; ...; ND7, ND8/ ND9, ND10; ND11, ND12/ NR1, NR2/ ND13), an output of each logic port of each of said subsets being connected to an input of a logic port of a next set, each of said n digital signals being applied to a first input of a respective logic port of the first set (ND1, ..., ND8) of said cascade and the last set of said cascade containing a last logic port (ND13) providing said selected signal (OUT), said selection circuit also including a plurality of gating means (FFD11, FFD12, ..., FFD121, FFD122, FFR11, FFR12, FFR21, FFR22, FFD131, FFD132), each one of which is associated with a respective one of said logic ports (ND1, ..., ND12, NR1, NR2, ND13) of a respective subset and is controlled by a first control signal provided at the output of said associated logic port, an output of said each one being connected to inputs of the gating means associated with the logic ports of a preceding subset of said cascade, the outputs of the latter logic ports being connected with the inputs of the logic port associated to said one gating means, said device control signal (UP-IN, DO-IN) being applied to the gating means (FFD131, FFD132) associated with said last logic port and the gating means (FFD11, FFD12, ..., FFD81, FFD82) associated with the logic ports of said first set each generating a second control signal (UP-IN1, DO-IN1; ...; UP-IN8, DO-IN8) indicative of said device control signal;
- n control circuits (CC1, ..., CC8) each able to generate from a respective one of said second control signals (UP-IN1, DO-IN1; ...; UP-IN8, DO-IN8) a third control signal (C1, ..., C8) to be applied to a second input of a respective logic port of said first set (ND1, ..., ND8), the third control signal which is applied to the logic port to which the digital signal (IN1, .., IN8) corresponding to said selected signal is applied being activated by the corresponding control circuit.

2. Signal selection device according to claim 1, characterized in that said device control signal (UP-IN, DO-IN) indicates whether the input to which the signal to be selected is applied is the same one as the one to which the previously selected signal was applied, or a previous or a next one and that each of said control circuits (CC1, ..., CC8) is able to generate a fourth (DO18, ... DO87) and a fifth control signal (UP12, ..., UP81) to be applied to a previous and a next control circuit respectively, said third, fourth and fifth control signals being generated in such a way that said third control signal is active when either a said fourth or a said fifth control signal from a next or a previous control circuit respectively is active or when a previously generated third control signal by said one control circuit was active whilst said second control signal (UP-IN1, DO-IN1; ...; UP-IN8, DO-IN8) indicates that neither said fourth nor said fifth signal to be generated by said one control circuit have to be active, said third signal being inactive when said second control signal indicates that either said fourth or said fifth control signal to be generated by said control circuit has to be active, the corresponding fourth or fifth control signal then being activated by said control circuit, or when a previously generated third control signal was not active whilst neither a said fourth or a said fifth control signal from a next nor a previous control circuit respectively is active.

3. Signal selection device according to claim 1, characterized in that said device includes n/2 sets of logic ports and that each of said subsets includes two logic ports except the subset of the last set which includes only said last logic port.

4. Signal selection device according to claim 1, characterized in that said gating means are of the flipflops type.

5. Signal selection device according to claim 1, characterized in that said control circuits have a predetermined identity and that said device control signal is indicative of the identity of the control circuit which has to generate said activated third control signal.

6. Signal selection device according to claim 1, characterized in that said device control signal (UP-IN, DO-IN) is a composed signal including an up signal (UP-IN) and a down signal (DO-IN), said up/down signal being activated when the next selected signal is the one of said n digital signals applied to the input of said device next/previous to the input thereof to which the currently selected signal is applied and that said gating means then each include two flipflops, said up signal and said down signal being applied to a respective one (FFD131, FFD132) of the two flipflops associated with said last logic gate (ND13).

7. Signal selection device according to claims 2 and 6 characterized in that each of said control circuits (CC1, ..., CC8) includes a first gating circuit (FF1, FF2) to which said respective second control signal (DO-IN1, UP-IN1) is applied and which provides at an output thereof said fourth control signal (DO18) and an intermediate control signal from which said fifth control signal (UP12) is derived said fourth and intermediate control signals being applied to a second gating circuit (FF3, FF4, NR3) of said control circuit, which is, via cascaded first (ND14) and second (ND15) logic gates, coupled to a third gating circuit (FF8, TI) which provides said third control signal (C1); a fourth (DO21) and fifth (UP81) control signal from said next and previous control circuit respectively being applied to a fourth gating circuit (FF7, FF6, NR4) of said control circuit which provides a signal to be applied to said second logic gate (ND15), an output signal of said third gating circuit being coupled back to an input of said first logic gate (ND14).

8. Signal selection device according to claim 7, characterized in that said second control signal (DO-IN1, UP-IN1) is composed of an up signal (UP-IN1) and a down signal (DO-IN1) and that said first gating circuit includes a first (FF2) and second (FF1) flipflop to which said up signal and said down signal are applied and which generate said intermediate and said fourth (DO18) control signals, said fourth and said intermediate control signal being applied to a third (FF3) and a fourth (FF4) flipflop respectively which, together with a third logic gate (NR3) to inputs of which an output of said third and fourth flipflops is connected, constitute said second gating circuit, the fourth (DO21) and fifth (UP81) control signals received from said next and previous control circuits respectively being applied to inputs of a respective fifth (FF7) and sixth (FF6) flipflop which, together with a fourth logic gate (NR4) to inputs of which an output of said fifth and sixth flipflops is connected, constitute said fourth gating circuit, said intermediate control signal being applied to a seventh flipflop (FF5) which provides said fifth control signal (UP12).

9. Signal selection device according to claim 7, characterized in that each of said control circuits (CC1, ..., CC8) includes multiplexer means (MUX) controlled by a common preset control signal (P) and to a first input of which a preset signal (PV) is applied, an output of said second logic gate (ND15) being connected to a second input of said multiplexer means, and said preset control signal controlling said multiplexer means in such a way that during preset said preset signal is passed to an output thereof, said output being connected with an input of said third gating circuit (FF8, TI), said preset signal being active when the third control signal (C1, ..., C8) to be generated by said control circuit has to be active.
